Europäisches Patentamt

European Patent Office

Office européen des brevets

(11) Publication number: **0 084 905**
A2

(12) # EUROPEAN PATENT APPLICATION

(21) Application number: **83200063.2**

(22) Date of filing: **17.01.83**

(51) Int. Cl.³: **B 65 G 47/84**

(30) Priority: **21.01.82 US 341534**

(43) Date of publication of application: **03.08.83**
Bulletin **83/31**

(84) Designated Contracting States: **BE CH DE FR GB IT LI LU NL SE**

(71) Applicant: **Alvey, Inc., 9301 Olive Boulevard, St. Louis Missouri 63132 (US)**

(72) Inventor: **Turnbough, Harold L., 4129 Malcolm, Lemay Missouri 63125 (US)**
Inventor: **Rustemeyer, John J., 1010A Rue De La Banque, Creve Coeur Missouri 63141 (US)**

(74) Representative: **Pirson, Jean et al, c/o Bureau Gevers, S.A. rue de Livourne, 7 bte 1, B-1050 Brussels (BE)**

(54) **Article sorting conveyor system.**

(57) An article sorting conveyor system having a principal article conveying surface (10) and spur or branch conveyors (12, 13) leading off of the principal conveying surface, platens (24) carried by the principal conveying surface so they may move crosswise of that surface when switching means (32) is actuated to direct platens for pushing an article onto a spur, and control means (65) to determine the distances from the switching means to the article entry location, to count the number of platens which agree with the length of articles for assuring the complete exit of the articles, and to establish the time when the switching means is to be actuated so that platens not being used to engage articles will not be jammed by premature actuation of the switch means.

"Article sorting conveyor system".

This invention relates to article sorting conveyor system in which articles can be distinguished on the basis of a common characteristic such as destination and diverted out of a random flow into groups of like character.

Conveyor systems for sorting articles into separate groups from a principal stream of articles are generally represented by such prior art as Vanderhoff et al 3,735,867 of May 29, 1973; Vanderhoff 3,791,518 of February 12, 1974; Wickam 3,987,888 of October 26, 1976; and Maxted 4,044,897 of August 30, 1977. The conveyor apparatus represented by these prior art patents comprises complicated and costly mechanisms which move the articles while on supporting pallets into sorted groups, or the conveyor surface is composed of skewed power rollers for moving articles in two directions at one time.

Another type of conveyor for converging or diverging articles is shown in Euverard 3,809,207 of May 7, 1974. This again illustrates the problem associated with means for moving articles, which is that the mechanism for accomplishing the movement of articles laterally is quite complicated and results in costly equipement.

One of the aspects of the present conveyor system involves control means for accomplishing sorting by finding a common characteristic of articles and thereafter relies on dimensional information to effect sortation without complicating the conveyor construction. In this respect, the prior art is represented by Milnes 3,061,732 of October 30, 1962 which, however, relies upon measuring means including an oscilloscope to furnish measurements in a magnified state assited by finite resolution circuits having tachometer-generator means to produce voltage proportional to article speed.

The problem in the art is that prior conveyor apparatus for sorting articles tends to incorporate expensive components which manipulate the articles in an unnecessary manner, either by individual supporting pallets or by skewing conveyor rollers, all of which leads to construction, assembly complications and maintenance problems.

In accordance with the present invention, a unique and uncomplicated article sorting conveyor system is provided by which the foregoing and other problems are largely overcome. A presently preferred system is embodied in a simple conveyor having a principal article moving surface connected by lateral spur conveyors to which articles after being identified, such as by a code reader, are thereafter guided onto designated spur.

In keeping with the simplified conveyor construction, a series of laterally movable pushers or platens are carried by the article moving surface in positions such that a fixed system of platen guides and cooperating switches are able to guide articles from the principal moving surface onto selected spurs without developing impact and rough handling.

The general objects of the present invention are to provide a sorting conveyor system with means to effect positive deflection of articles onto spur conveyors, to provide an arrangement of platens which allow for minimum spacing between articles to avoid the need for gate devices, to provide a system of controls of simple and trouble-free character for recognizing articles and sorting them with smooth acting platens which guide with substantially no impact on the articles, and to use article dimensional information for determining the number of platens to effect the smooth and positive diversion of articles onto whichever spur has been designated.

This invention will be better understood by means of the following description referring to annexed drawings.

Fig. 1 is a fragmentary plan view of the present conveyor system illustrating the arrangement of the principal and spur conveyors and the arrangement of operating components.

Fig. 2 is a transverse sectional view of the principal conveyor to illustrate the construction thereof and the article pushing platens, the view being taken along line 2-2 in Fig. 1.

Fig. 3 is a fragmentary plan view of a typical switch assembly provided in the principal conveyor to effect sorting of articles onto the spur conveyors.

Fig. 4 is a fragmentary sectional view taken along line 4-4 in  Fig. 3.

Fig. 5 is a fragmentary sectional view of a sensor for effecting a control function associated with the switch means, the view being taken along line 5-5 in Fig. 1.

Fig. 6 is a further view of the sensor control to illustrate the adjustability thereof, the view being taken along line 6-6 in Fig. 5.

Fig. 7 is a block form diagram of a presently preferred control system for the conveyor of Fig  1,and

Fig. 8 is a fragmentary plan view of a modified conveyor system in which articles are conveyed to spur conveyors arranged  on both sides of the principal conveyors.

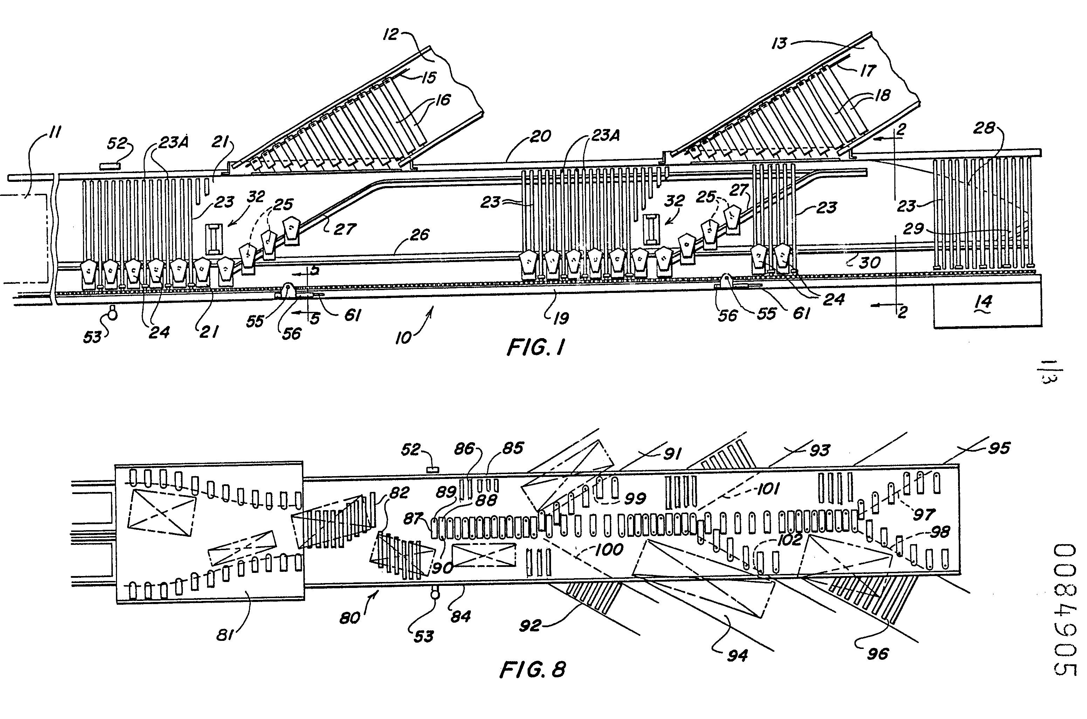

Fig. 1 illustrates the general conveyor assembly in which a main conveyor 10 is supplied with articles or packages from an induction conveyor 11. The main conveyor 10 is intended to move the articles in a direction for runoff at one or more spur conveyors, two such spur conveyors 12 and 13 being illustrated. A suitable conveyor drive assembly is shown at 14 for the main conveyor 10, its manner of connection is standard and is not believed necessary to show. Separate drive means in the form of a power rope 15 is employed to operate article supporting rollers 16 in spur 12. A similar rope drive 17 is employed for operating article supporting rollers 18 in spur 13. While powered roller spur conveyors are illustrated, gravity roller conveyors or slide ramps can be substituted with equally satisfactory results, and all are intended to be included in the term spur.

The conveyor 10 has a frame in which side rails 19 and 20 support chains 21 and chain tracks 22 for moving a series of spaced parallel rod or tubular elements 23 which together constitute an article conveyor surface. The chains are operative in the frame in an endless path which has a return portion beneath the upper conveying surface. Articles are supplied to the conveyor 10 by the induction conveyor 11 constituting the source of articles which may vary in length and be moved onto conveyor 10 in any random order of lengths for subsequent sortation onto the spur conveyors.

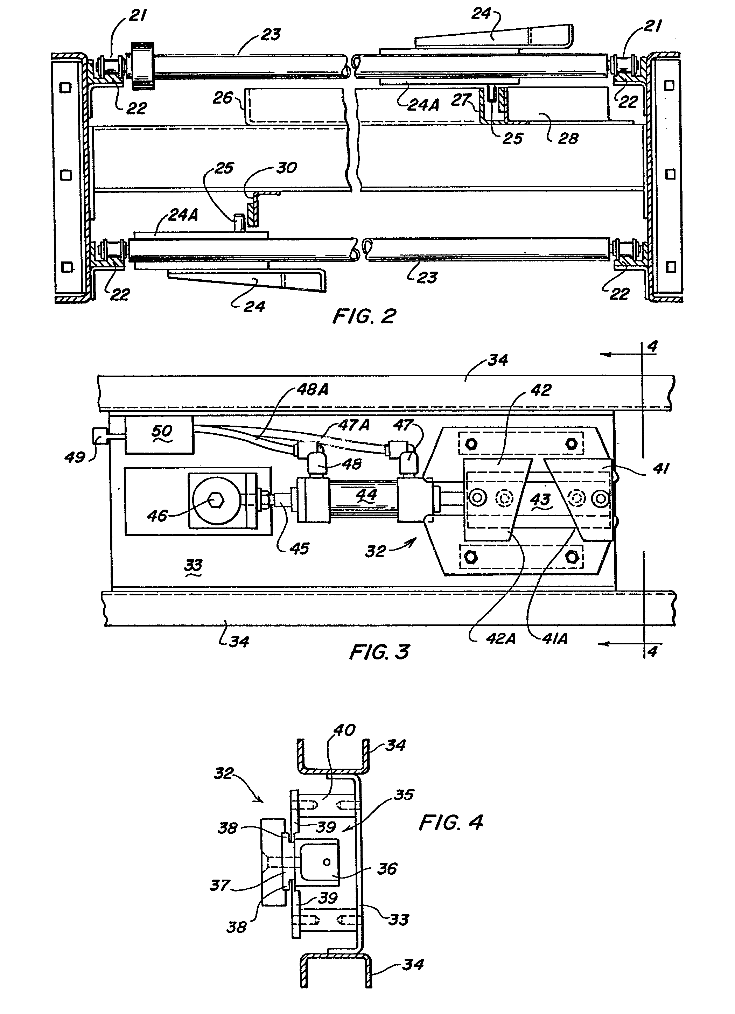

It is seen that there are a series of pushers or platens 24 associated with pairs of elements 23, and there is a single element 23A between each platen. The platens 24 are attached to suitable carriers 24A (Fig. 2) slidably mounted on an adjacent pair of elements 23 so they are able to move laterally across the width of the conveying surface. In order to position the platens 24, the frame carriers a guide rail 26 located just beneath the elements 23 which form the article supporting surface. It can be seen in Figures 1 and 2 that the platens 24 are provided with pins 25 which are intended to cooperate with the guides. The guides include the first guide 26 which is fixed in a position spaced from the

frame side rail 19 and is parallel with that rail. The guide cooperates to cause all platen pins 25 to position the associated platens 24 adjacent rail 19. The guide 26 is interrupted for short lengths at the location of each spur 12 and 13 so a divert guide 27 can be engaged by pins 25 when platens are to be slidably displaced across the surface for guiding an article onto a spur. There are switch assemblies at the divert location, the same being seen in partial plan view in Fig. 1 at 32. Once the platen has been diverted to move toward the opposite frame rail 20, its pin 25 follows the straight continuation of guide 27 until the pin 25 encounters a return guide 28 near the end of the frame where the elements 23 are caused to turn under and return to the opposite or feed end. After each platen 24 has traveled to the under side, the pins 25 engage on a guide 29 which is angularly directed to slide the platen 24 toward the side rail 19 to follow a guide 30 which is positioned to return all platens 24 to an alignment for engaging guide 26.

Figs. 3 and 4 illustrate a typical switch assembly 32 positioned for cooperation with diverting articles onto either spur 12 or 13, depending on the control response to be explained below. The assembly 32 is carried on a channel shaped pan 33 attached to ribs 34 which span the distance between side rails 19 and 20. A switch body 35 includes a lower part 36 and an upper part 37 which provide side opening slots 38 to receive fixed gibs 39 which supportas well as guide the linear movement of the body 35. The gibs 39 are mounted on blocks 40 fastened to the channel 33. The body 35 carries a first switch plate 41 and a second switch plate 42 spaced from plate 41 so that a channel space 43 is formed between them. The plate 41 has an angled face 41A which is adapted to bridge the gap in the fixed guide 26 at each spur and cause the platen pins 25 to follow the face 41A and engage the diversion guides 27. The plate 42 has a face 42A which is angled to steer the platen pins 25 into positions to continue through the gap and follow guide 26 therebeyond.

The switch assembly 35 is caused to move by means of a piston motor means 44 having its base end connected by an end assembly 45 to a fixed anchor 46. The motor means is provided with pressure fluid fittings at 47 and 48 which act interchangeably as inlets and exhausts for pressure fluid, such as air for example. These fittings are connected by flexible conduits 47A and 48A to a source of pressure fluid 49 which is under the control of solenoid operated reversing valve 50. The valve 50 is actuated in response to a control system to be explained.

Returning now to Fig. 1, article length or size distinguishing means is seen to include a reflective target 52 adjacent side rail 20, and supported at the opposite side rail 19 is a light projector and a photocell mounted in housing 53. The light beam projected to the target 52 and reflected back to the photocell is broken each time an article passes between the beam source and the target. The length of time during which the beam is obstructed is used to measure articles by means of a counter which senses the number of the elements 23A which pass the sensor 55 while the beam is broken.

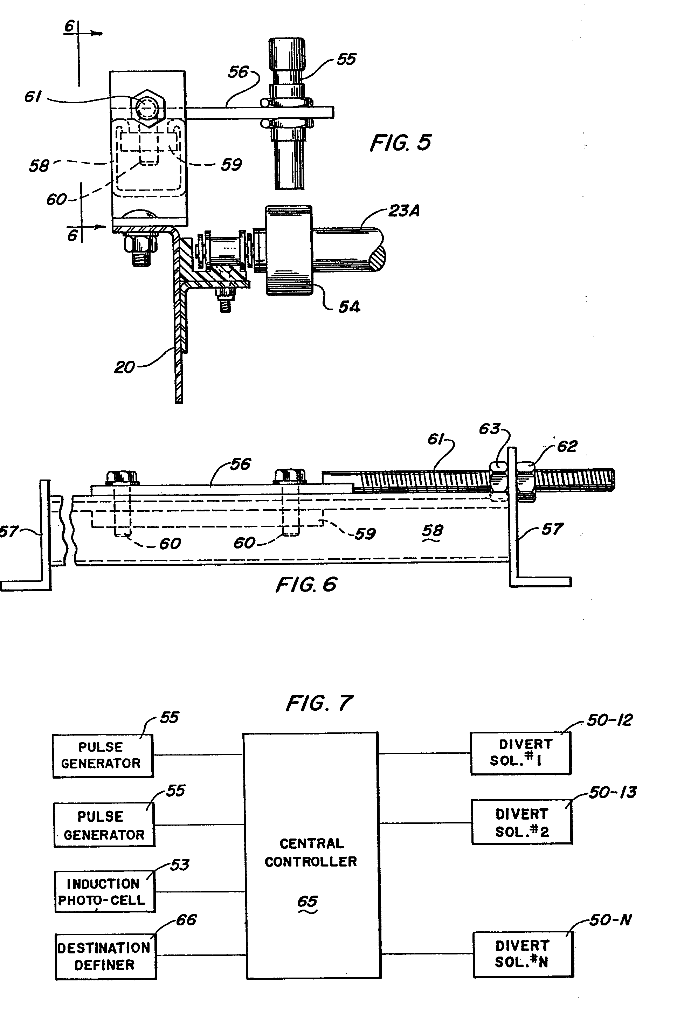

The passage of elements 23A are applied to the process of counting by means of fixing collar elements 54 (Fig. 5) on each one of the elements 23A which are located between the pairs of elements 23 which support the platens 24. Thus, a count of platens can be developed. The means for sensing collars 54 is embodied in a proximity sensor 55 (Fig. 5) carried on support 56 which is part of an adjustable mount. The mount (Fig. 6) comprises brackets 57 attached to the side rail 29 and spaced apart so that they can support a track 58 carrying a slide block 59. The block 59 moves in the track and is connected by threaded elements 60 to the support 56 which rests on top of track 58. An adjusting screw 61 is used to slide the support 56 and block 59 along track 58, as desired. The desired adjustment for the sensors 55 through its screw 61 is to synchronize the operation of the motor means 44 for the switch assemblies 32 with the pulse train from the sensors 55. The pulse train is used to count the distance to the switch assembly 32, to count the platens which substantially agree with the length of articles, and to provide the exact time when the motor means 44 will be energized into its divert position so as not to jam against a pin 25 on a platen 24 which precedes the first platen in a group of

9 0084905

platens selected for switching. A pair of locking nuts 62 and 63 secure the screw in adjustment, and elements 60 can be retightened to fix the position of the sensor 55. Since the proximity sensor 55 develops a pulse for the passage of each collar 54, it may be located at any convenient place on the principal conveyor 10. It is not necessary to rely on collars as any moving part of the conveyor which is repetitive in operation can be selected for the counting function, and one example is counting the platens directly. Furthermore, it is desired to employ a pair of sensors 55 (See Fig. 1) for purposes of being able to detect a malfunction, as will be explained.

Turning to Fig. 7, there is shown in block form one possible control system in which there is a central controller 65 where the necessary functions of the system are carried on. It is noted that two proximity sensors 55 are employed to generate pulses each time a collar 54 passes through the magnetic field. The two sensors or pulse generators 55 provide redundancy and diagnostic information about the operation of the conveyor system, but the sortation function can operate by pulses generated by either one. When the drive 14 is energized, the elements 23 and 23A which form the article conveying surface are caused to move from left to right as seen in Fig. 1. The sensors 55 generate pulses which are received in the central controller 65 which pulses are an indication of the passing of a platen at each sensor 55. However, when a signal from the induction photocell 53 is received, due to an article breaking the light beam, the central controller 65 can initiate its intended function. That is the controller 65 now can track the platens as they move along with the article which interrupted the light beam. The interruption of the light beam can be detected at any time in the spacing of the collars 54 which represent the distance between platens. The controller keeps track of the number of platens which correspond to the pulses received during the continued interruption of the light beam. A shift register is employed to shift one space for each pulse from a sensor 55 and interruption of the light beam at induction photocell 53. Also, while an article is interrupting the light beam of the induction photocell 53, the destination of the article is fed into the controller 65 so that the counting of pulses from generators 55 can now become meaningful to the eventual actuation of the switch operating solenoid valve 50 (See Fig. 3).

It must be understood that the effective and meaningful response of the controller 65 is dependent upon the number of platens between the induction photocell 53 location and each switch assembly 32. For example, if it is known that the location of the switch plate 41 is 20 platens from the location of the photocell 53, and the destination of an article is spur 12, the shift register in controller 65 counts the pulses from sensor 55 and can follow the movement of the lead platen associated with the article inducted by conveyor 11. The article will interrupt the light beam until it has cleared and restored a pulse from the means 53 at which time a zero is fed into the shift register and the shift register will be incremented one space. Now the controller 65 has received the necessary information about the article destination and the number of platens which correspond to its length. When the count for the lead platen reaches 20 (the assumed example) the solenoid 50-12 will be energized and plate 41 will be drawn in to present its diversion surface 41A to the pin 25 on the lead platen and on each following platen until the platens corresponding to the length of the article have been diverted by that surface 41A to follow guide 27.As the last platen 24 clears switch plate 41, the solenoid 50-12 will be actuated to shift or return switch plate 41 to its normal position so subsequent platens 24 will pass through the channel 43 in switch associated with solenoid 50-12 and not be diverted.

Thus, only the number of platens corresponding to the length of an article are tracked and caused to be diverted so as to guide that article onto the designated spur selected by the function of the central controller 65 combining the destination information with the shift register counting. As indicated in Fig. 7, the central controller 65 functions in response to information supplied by means 53, 55 and 66 to time the operation of diverter valve solenoids 50-12, 50-13 up to 50-N spurs leading away from conveyor 10. It is important to arrange the platens 24 and collars 54 at substantially uniform distances for the shift register to function properly in terms of the distance travelled by the conveying surface. The manner of providing the sensor adjustment seen in Fig. 6 is important to correlate the relationship between pin 25 and the channel space 43 to permit shifting without interference. The destination definer 66 may be a code reader or keying station whose function is to determine the destination of each article which enters the conveyor 10 from source conveyor 11.

Synchronizing the switch motion with the passing of the pins 25 on the platens 24 is achieved by adjusting the sensor 55 so it has a definite relation to the location of the light beam projector 53 and reflector 52. This relationship is set for the number of platens 24 from the projector 52 to each switch 32 for the respective spurs 12, 13, etc. That information is stored in the controller 65 and a spur is selected by operation of the destination definer 66. For example, if spur 12 is the destination and knowing its switch 32 is 20 platens from the projector 53, when an article breaks the beam the pulses from sensors 55 are now counted in terms that when 20 pulses are registered a signal is sent to switch solenoid 50-12 to actuate the motor means 44. However, it is neeessary to avoid actuation of motor means 44 until the pin 25 on the platen 24 which is ahead of the lead platen associated with the leading end of the article has cleared the switch. The breaking of the beam can occur between any two collars 54, so the platen 24 which trails the collar which generated the second pulse is the lead platen for that article, and the platen which passed the projector 53 before the second pulse is the one whose pin 25 must clear the plate 41 in the selected switch assembly 32 to prevent a jam.

In Fig. 8 there is illustrated, in plan view a modified conveyor system which is arranged to divert articles to either side of the principal conveyor 80. The principal conveyor 80 is provided with a lane selecting induction conveyor 81 in which article supporting pallets 82 are laterally movable on linear travel supporting means as directed by the destination definer 66 of control means 65. Such a conveyor may employ the structure of the sorting switch of Wickam 3,987,867. The induction conveyor 81 may be preceded by a converger conveyor employing the structure of Turnbough No. 4,319,676. , filed May 2, 1980, which is operative to receive articles from two or more supply conveyors and laterally move the articles to a common discharge station. However, the present invention is not concerned with these prior art structures, and attention will be directed now to the principal conveyor 80.

The view in Fig. 8 is schematically presented as the details of structure will duplicate that which is disclosed in Figs. 1 to 7 inclusive. In particular, the conveyor 80 is made up of side rails 84 and 85 which form tracks for the chain drives (not shown) connected to the opposite ends

0084905

of the tubular elements 86 which together make up the article supporting surface. The article moving surface is wider than that for conveyor 10 as the article guiding platens now follow guide rails which extend along the middle of the span of elements 86. There are two guide rails which function in the manner of guide rail 26 in Fig. 1, each rail being associated with alternate platens. Thus, one rail will maintain platens 87 in position, and the other rail will maintain platens 88 in position. The platens 87 have pins 89 and platens 88 have pins 90. In the modified conveyor system, there are three spurs 91, 93 and 95 leading off from the left side rail 85, and there are three spurs 92, 94 and 96 leading off from the right side rail 84. In each instance for simplicity the spurs will be of the gravity roller type.

The platens 87 and 88 travel along the center of the conveyor 80 and as they near the end run of the conveyor guide rails 97 and 98 pick up the platen pins 89 and 90 respectively and laterally slide the platens to assure the diversion of all articles that have been allowed to travel the length of the conveyor. Subject to suitable control function, each spur 91 and 93 is provided with a switch assembly of the character shown in Figs. 3 and 4, and reference to those views will suffice for an understanding of the structure and its operation in association with platen divert rails 99 and 101. In like manner other switch assemblies are located to cooperate with divert rails 100 and 102. The switch assemblies for guides 99 and 101 are controlled by a circuit which is responsive to the breaking of a light beam which starts tracking the counting pulses from a proximity sensor of the type shown in Fig. 5, except that in this instance it will count platens 87. Likewise, the switch assemblies for divert spur guides 100 and 102 are controlled by a separate circuit which is responsive to the breaking of a light beam which then starts tracking the counting pulses from a second proximity sensor (See Fig. 5) which now directly counts platens 88.

In the modified conveyor system of Fig. 8, the destination decision is made as the articles are moved onto the lane selecting induction conveyor 81. Thus, articles are sorted out on the basis of where they are intended to be diverted in keeping with the destination for the spurs at the right and left of the principal conveyor 80. As each article moves into the right or left side lanes of conveyor 80 a light beam is broken and a count is initiated to follow the movement of the platen which coincided with the first count pulse and to count the number of platens which pass before the light beam is re-established. That information is processed in a suitable shift register and when the first platen reaches the designated spur the switch assembly at that spur will divert the first platen and the counted number of following platens before switching back to terminate the diversion of platens. While the number of platens that are counted is related to the length of an article, the count is intended to determine how many platens are needed to divert the article so the last platen of the count will make certain the article has fully cleared the conveyor path and is within the influence of the spur to which it has been diverted.

# 0084905

## CLAIMS.

1. An article sorting conveyor system comprising :

a) a principal conveyor (10) having an article receiving inlet and a plurality of article supporting elements (23) forming a moving surface which is part of an endless conveyor circuit ;

b) article receiving spur means (12,13) in position to receive articles from said principal conveyor (10);

c) guide means adjacent said article supporting elements in said moving surface including first guide (26) extending lengthwise of said principal conveyor, second guide (27) extending angularly relative to said first guide toward said spur means, and other guides (28,29,30) associated with said principal conveyor extending from said first and second guides to the receiving end of said principal conveyor;

d) a plurality of platens (24) carried by said article supporting elements (23) of said principal conveyor (10) in regularly spaced order and having means (25) engageable with said first and second guides (26,27) for directing said platens (24) selectively lengthwise and angularly relative to said principal conveyor article moving surface, said engageable means on said platens engaging said other guides (28,29,30) for return to said principal conveyor inlet;

e) means (52,53) adjacent said principal conveyor inlet for indicating the presence of an

0084905

article moving onto said principal conveyor (10) and a dimensional characteristic of such article, said indicating means (52,53) being disposed a known distance in advance of said spur means (12,13);

f) switch means (32) cooperating with said first and second guides and operative for directing the travel of said platens relative to said first and second guides;

g) platen sensing means (55) for generating signal pulses upon passage of platens at said article indicating means; and

h) controller means (65) responsive to said means for indicating the presence and the dimensional characteristic of an article moving onto said principal conveyor, and responsive to pulses generated by said platen counting means for converting said indication from said means and the counting of said generated pulses into a signal to control the operation of said switch means (32) and the direction of travel of said platens beyond said switch means.

2. The article sorting conveyor according to claim 1 characterized in that said controller (65) operates said switch means (32) to direct platens onto said second guide (27) substantially equal in number of platens to the dimensional characteristic of the article indicated by said means to be moving onto said principal conveyor (10).

3. The article sorting conveyor according to claim 1, characterized in that said spur means (12,13) lead off from said principal conveyor (10) at one side thereof, and said first guide means (26) are disposed on said principal conveyor along the side thereof opposite to said spur means.

4. The article sorting conveyor according to claim 1, characterized in that said spur means (12,13) lead off from said principal conveyor (10) at opposite sides thereof, said first guide means (26) are disposed centrally of said principal conveyor, and said second guide means (27) extend angularly from said first guide means toward said spur means (12,13).

5. The article sorting conveyor according to claim 1, characterized in that said switch means (32) comprises a body (35) having switch plates (41,42) in spaced relation to form a channel therebetween defined by switch plate surfaces, and said platens each have projecting elements (25) adapted to enter said channel and be selectively engaged by said switch platen surfaces for determining the direction of travel of said platens moved beyond said switch means.

6. The article sorting conveyor according to claim 1, characterized in that said article indicating means (52,53) identifies a platen corresponding to the leading end and the trailing end of an article, and said controller means (65) responds to said article indicating means for relating said identified platens to said platen counting means and to said switch means whereby said switch means operates to divert each of said platens corresponding to the leading and trailing ends and each intervening platens for diverting the article in

0084905

the same direction.

   7.   An article sorting conveyor system comprising :

   a) a principal article conveyor (10) having means defining an elongated article conveying surface movable in a closed path;

   b) an article receiving spur(12,13) having a receiving end communicating with said principal conveyor (10);

   c) platen elements (24) carried by said principal conveyor for movement therewith and transversally thereof;

   d) guide means (26,27) arranged in fixed positions adjacent said principal conveyor for selectively directing said platen elements crosswise of and obliquely relative to said principal conveyor;

   e) switch means (32) operative for engaging said platens and moving them into the influence of said guide means which diverts them across said principal conveyor to a spur;

   f) platen counting means operative upon operation of said principal conveyor;

   g) article induction means to signal the entry of each article to said principal conveyor and to identify a number of platens substantially corresponding to a dimension of each article entering said principal conveyor;

   h) and control means (65) responsive to said induction means and the substantially simultaneous count by said platen counting means for operating said switch means to divert only those identified platens which substantially match each article, said diverted platens being directed by said guide means obliquely of said principal conveyor for diverting the article onto said spur.

FIG. 1

FIG. 8

1/3

0084905

FIG. 2

FIG. 3

FIG. 4

*FIG. 5*

*FIG. 6*

*FIG. 7*